# EUROPEAN PATENT APPLICATION

(11) **EP 2 533 085 A1**
(43) Date of publication of application: **12.12.2012**
(21) Application number: 11169103.6
(22) Date of filing: 08.06.2011
(51) Int. Cl.: G02B 6/44, H01R 13/52, H02G 3/08

(54) **Tear off caps for ports**

(71) Applicant: Tyco Electronics Raychem BVBA, 3010 Kessel-Lo (BE)
(72) Inventor: Kempeneers, Dirk, 3200 Aarschot (BE); Bryon, Roel Modest Willy, 3200 Aarschot (BE); Junius, Erwin, 3120 Tremelo (BE); Vandamme, Wouter, 9040 Sint Amandsberg (BE); De Vos, Pieter Arthur Anna, 2600 Berchem (BE); Doultremont, Pieter, 3500 Hasselt (BE); Foulon, Wouter, 3000 Leuven (BE)
(74) Representative: Obst, Bernhard

(57) **Abstract**

A telecommunications port including a port (20, 120) includes a port body (30, 130) having a circular end (42, 142) and a tear-off tap (24, 124) positioned on the circular end (42, 142). A webbing (52, 152) seals the tap (24, 124) to the circular end (42, 142). The tap (24, 124) includes a tap body (50, 150) including a projecting handle (60, 160) and a reinforcement element (68). In one embodiment, the reinforcement element (68) includes a spherically shaped middle body portion (70). A further embodiment of a reinforcement element (68) includes a tapering circular rib (80) extending around the periphery of the tap body (50) from the handle (60) to an opposite side (82) of the tap body (50). A further embodiment of a reinforcement element (68) includes a linear rib (190) positioned on an inside surface of the tap body (150). A gap (92, 192) is provided inside port (20, 120) to promote removal of the tap (24, 124). A method of use includes accessing a port (20, 120) by providing a tear-off tap (24, 124) attached to a circular end (42, 142) of a port body (30, 130) with a webbing (52, 152), gripping a projecting handle (60, 160), and pulling the handle (60, 160) to tear the webbing (52, 152) to form a circular opening, wherein a reinforcement element (68) prevents breakage of the tap body (50, 150).

## Description

### Field of the Invention

The present invention relates to ports for telecommunications boxes, enclosures, or panels.

### Background of the Invention

Cables enter telecommunications boxes, enclosures, or pass through panels through ports or other openings. Knockouts are known for creating a cable passage in the field at a desired time when the opening is needed. Knockouts are sometimes difficult to use and create less than a full opening initially, requiring multiple steps to create the full opening. Sometimes the knockouts do not fully remove from the opening when the operator attempts to remove the knockout. For example, the knockout may break in part, with a portion remaining in the opening. This may require additional tools or cutting to fully remove. There is a need for devices and methods for creating openings in ports where the opening is easy to form and creates a desired shape in a quick and convenient manner.

### Summary of the Invention

The present invention concerns a telecommunications port including a port body having a first end and a tear-off tap positioned on the first end. A webbing seals the tap to the first end. The tap includes a tap body including a projecting handle and a reinforcement element.

The shape of the first end is adapted to the shape of cables to be inserted or passed through the respective port. The shape of the first end is chosen to conform to the desired shape of the opening of the port after the removal of the tear-off tap.

In one embodiment the first end is a circular end.

In other embodiments the opening formed by the first end after removal of the tear-off tap has an elliptical shape.

In one embodiment, the reinforcement element includes a spherically shaped middle body portion. A further embodiment of a reinforcement element includes a tapering exterior rib extending around the periphery of the tap body from the handle to an opposite side of the tap body. A further embodiment of a reinforcement element includes a rib positioned on an inside surface of the tap body.

The port can be integrally molded with the tap in place.

The invention also relates to a method of using a port including providing a tear-off tap attached to a first end of a port body with a webbing, gripping a projecting handle, and pulling the handle to tear the webbing to form a first opening, wherein a reinforcement element prevents breakage of the tap body. The shape of the first end conforms to the desired shape of the opening to be formed by removing the tear-off tap. The first end may have any shape conforming to the cables to be passed through the port.

In one embodiment the first end is a circular end. By removing the tear-off tap a circular opening is formed.

### Brief Description of the Figures

FIG. 1 is a perspective view of a portion of a telecommunications enclosure and a port with a tear-off tap in accordance with a first embodiment of the invention;
FIG. 2 is a further perspective view of the device shown in FIG. 1;
FIG. 3 is another perspective view of the device shown in FIG. 1;
FIG. 4 is a side view of the device shown in FIG. 1;
FIG. 5 is a further side view of the device of FIG. 1;
FIG. 6 is a cross-sectional view of the device shown in FIG. 5, taken along lines 6-6;
FIG. 7 is a further side view of the device shown in FIG. 1;
FIG. 8 is a bottom view of the device shown in FIG. 1;
FIG. 9 shows the port after removal of the tear-off tap;
FIG. 10 is a perspective view of a portion of a telecommunications enclosure and a port with a tear-off tap in accordance with second embodiment of the invention;
FIG. 11 is a side view of the device of FIG. 10;
FIG. 12 is a bottom view of the device of FIG. 10;
FIG. 13 is a cross-sectional side view of the device of FIG. 12, taken along lines 13-13;
FIG. 14 is a perspective cross-sectional side view of the device of FIG. 10;
FIG. 15 is a schematic view of a telecommunications enclosure including three ports extending outwardly from the enclosure;
FIG. 16 is an alternative telecommunications enclosure including three ports extending inwardly into the enclosure.

### Detailed Description of the Preferred Embodiments

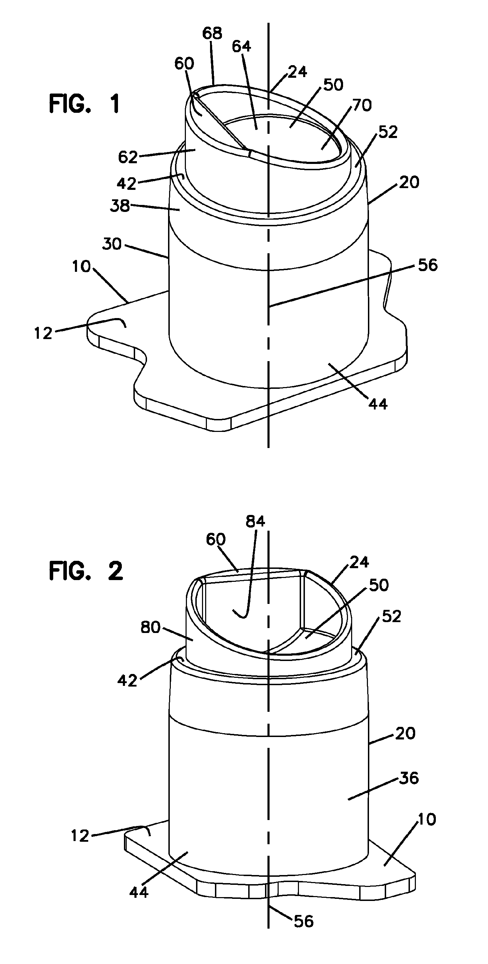

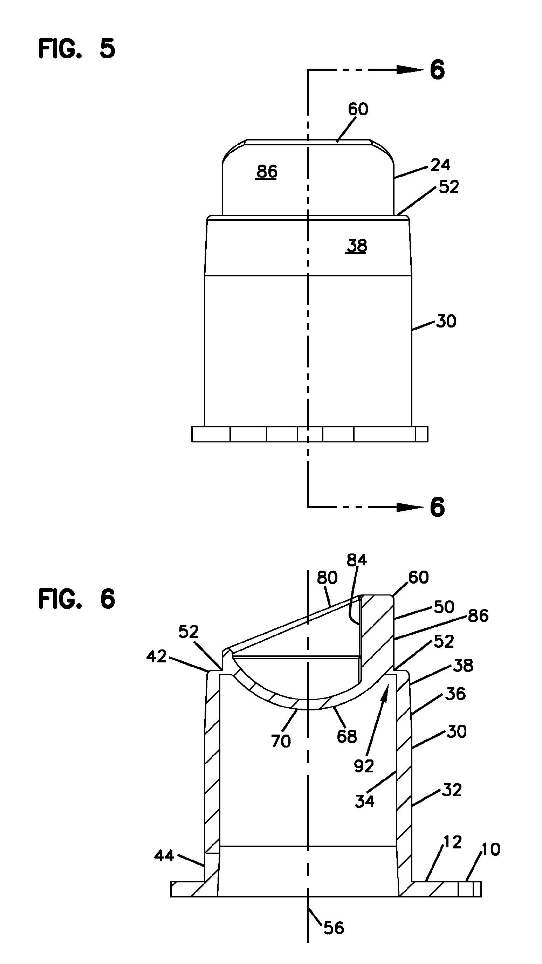

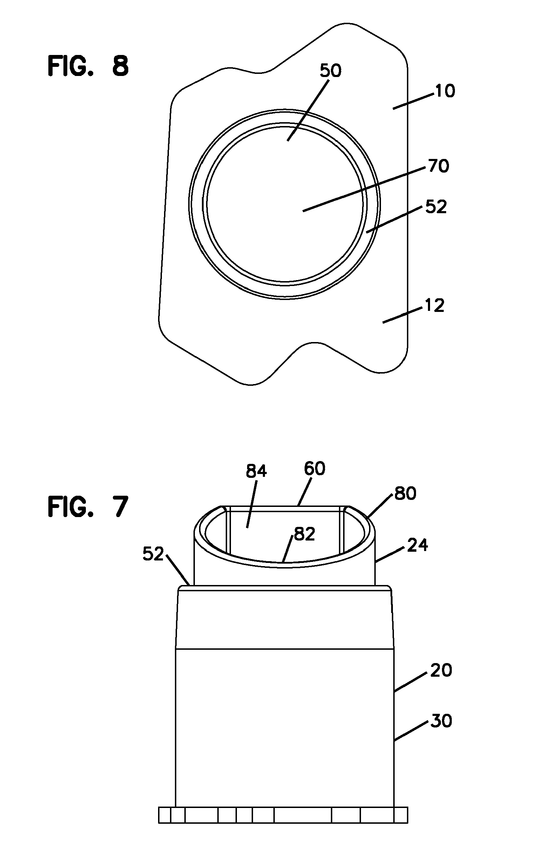

Referring now to FIGS. 1-9, an enclosure housing 10 includes a panel 12 and a port 20. Port 20 defines an entry and exit location for cables to enter or exit enclosure 10. Port 20 includes a tear-off tap 24 to create the cable passage through port 20.

Port 20 includes a port body 30 having a tubular wall 32 defining a generally cylindrically interior surface 34 and a generally cylindrical exterior surface 36. Port body 30 extends from a first end 42 to second end 44. Tear-off tap 24 is located at first end 42.

Tear-off tap 24 includes a tap body 50 connected to port body 24 by a webbing 52. Webbing 52 is generally thin in construction relative to port body 30 and tap body 50. Webbing 52 provides a weakened area that will tear when tap body 50 is pulled. Webbing 52 is provided fully around the periphery of tap body 50 and port body 30 at first end 42.

Port 20 generally includes a longitudinal axis 56 central to tubular wall 32. Tap body 50 includes a handle 60 offset from axis 56 at one side 62 of tap body 50. Handle 60 generally projects axially away from end 42 of port body 30. Tap body 50 includes a base 64 which covers first end 42.

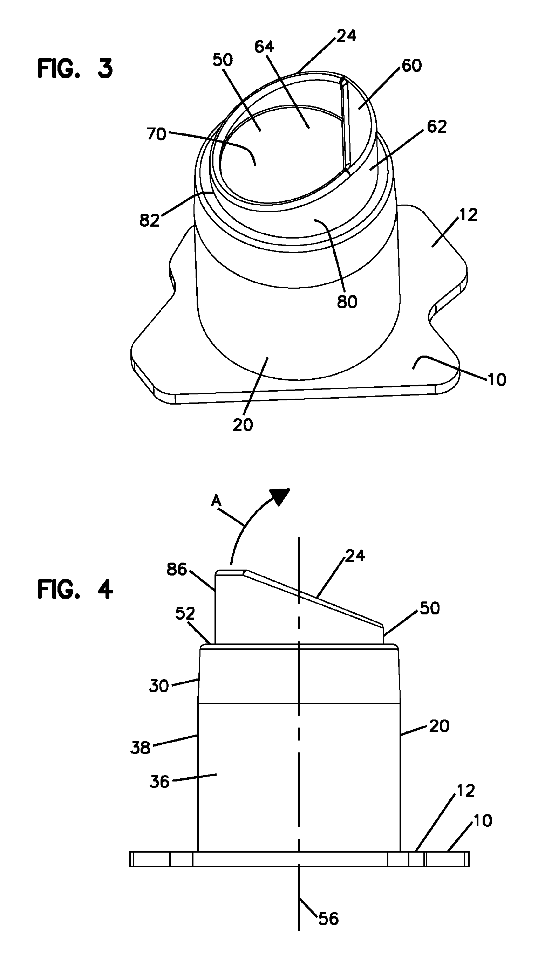

To open port body 30 and tear away tap body 50 requires that webbing 52 be broken. Handle 60 is pulled in a prying manner by pulling generally axially and away from side 38 of tubular wall 32. See arrow A of FIG. 4. Pliers may be used to grip handle 60; or handle 60 may be gripped by hand. Gripping surfaces 84, 86 on handle 60 are gripped during use to open port 20.

To prevent breakage of base 64 and to encourage creation of a circular opening in port body 30 formed by tearing of webbing 52, a reinforcement element 68 is included on tap body 50. One example of reinforcement structure shown in the embodiment of FIGS. 1-9 is a spherically shaped middle body portion 70, which forms a depression or indent for base 64. The spherically shaped middle body portion 70 provides reinforcement for base 64 to prevent breakage when handle 60 is pulled to break webbing 52.

The embodiment of FIGS. 1-9 also shows a second reinforcement element 68 in the form of an exterior rib 80. In the illustrated embodiment, rib 80 tapers in height from handle 60 to opposite side 82 of base 64 around the periphery of base 64. Such exterior rib 80 provides reinforcement to base 64 to prevent breakage when handle 60 is pulled to break webbing 52.

In the preferred embodiment of FIGS. 1-9, port 20 with tear-off tap 24 is integrally molded as a single part. Port body 30 can be further integrally molded with enclosure housing 10, if desired. One useful material is polypropylene.

As shown, gripping surface 84 and middle body portion 70 extend down into port body 30. Gap 92 is also provided inside port 20. Such structure promotes the prying action to break webbing 52 and separate tap 24 from port 20.

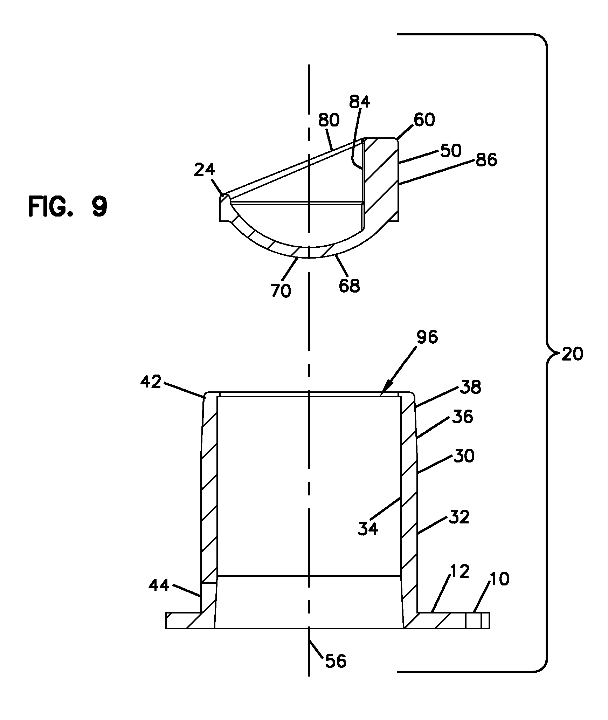

FIG. 9 shows port 20 after removal of the tear-off tap 24. Opening 96 is created in port body 30. Opening 96 creates the cable passage into and out of enclosure housing 10.

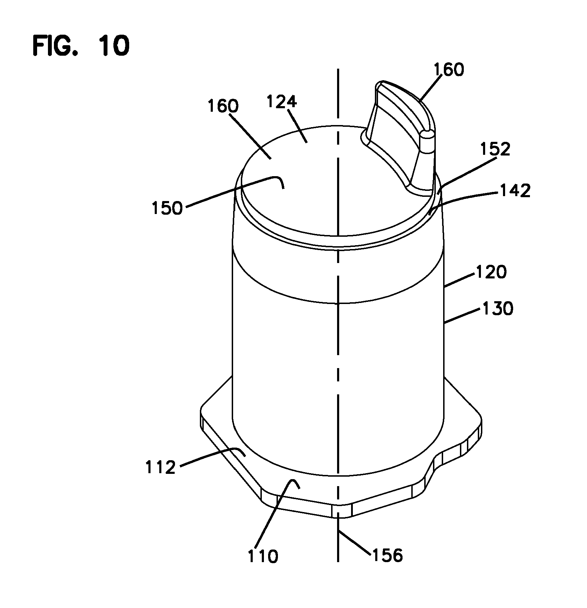

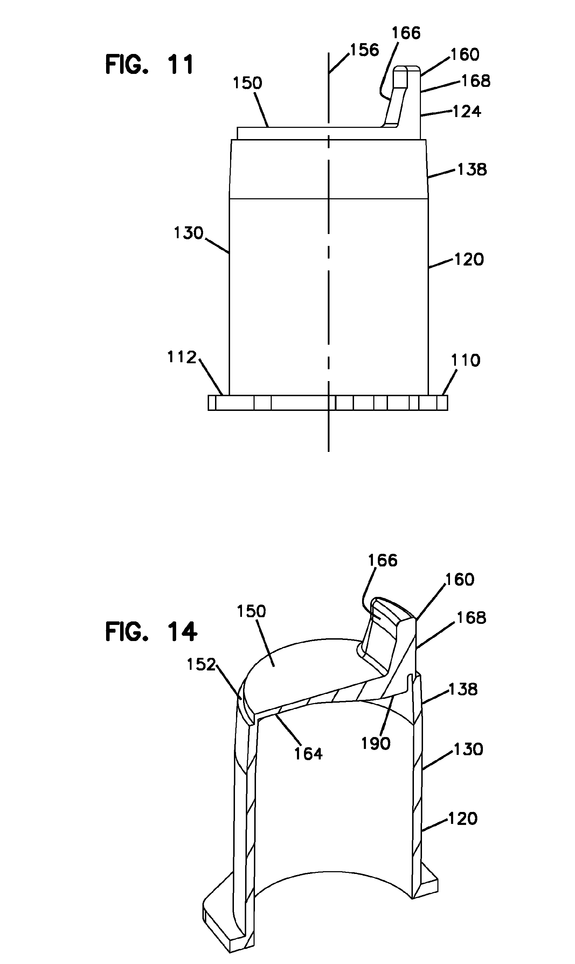

Referring now to FIGS. 10-14, a second preferred embodiment of an enclosure housing 100 including a panel 112 is shown. Port 120 includes a tear-off tap 124. Port 120 includes a port body 130 similarly constructed to port body 30 noted above. A thin webbing 152 connects a tap body 150 to port body 130. Tap body 150 includes a handle 160 at one side 162 offset from axis 156. A base 164 of tap body 150 is generally planar. Base 164 includes reinforcement element 68 in the form of an interior rib 190 having a central location generally perpendicular to axis 156 and extending transversely to handle 160. Rib 190 has a linear shape.

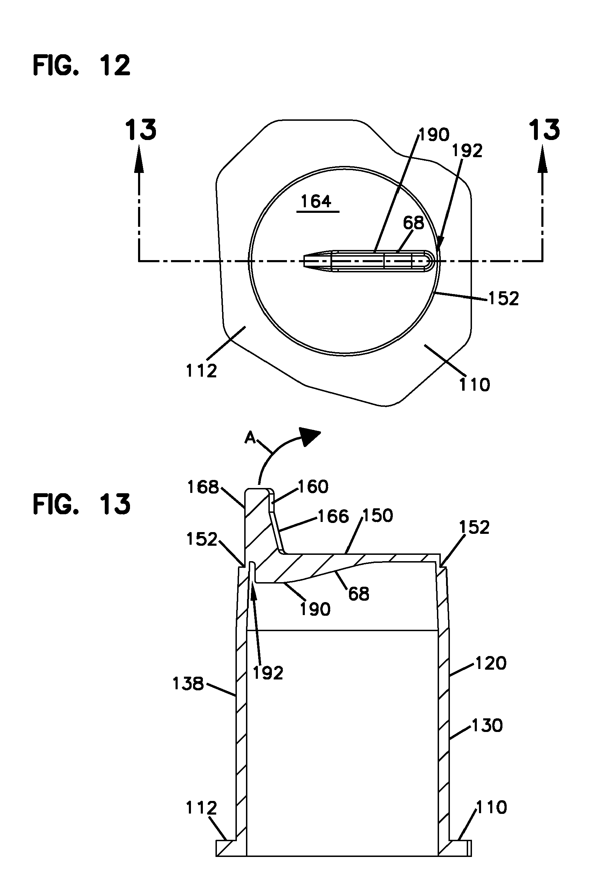

Handle 160 is pulled in a prying manner by pulling generally axially and away from side 138. See arrow A of FIG. 13. Rib 190 also tapers to a smaller height as it extends away from side 138. A gap 192 is formed between rib 190 and port body 130. Such structure promotes the prying action to break webbing 152 and form a circular first end 142.

In the preferred embodiment of FIGS. 10-14, port 120 with tear-off tap 124 is integrally molded as a single part. Port body 130 can be further integrally molded with enclosure housing 110, if desired. One useful material is polypropylene.

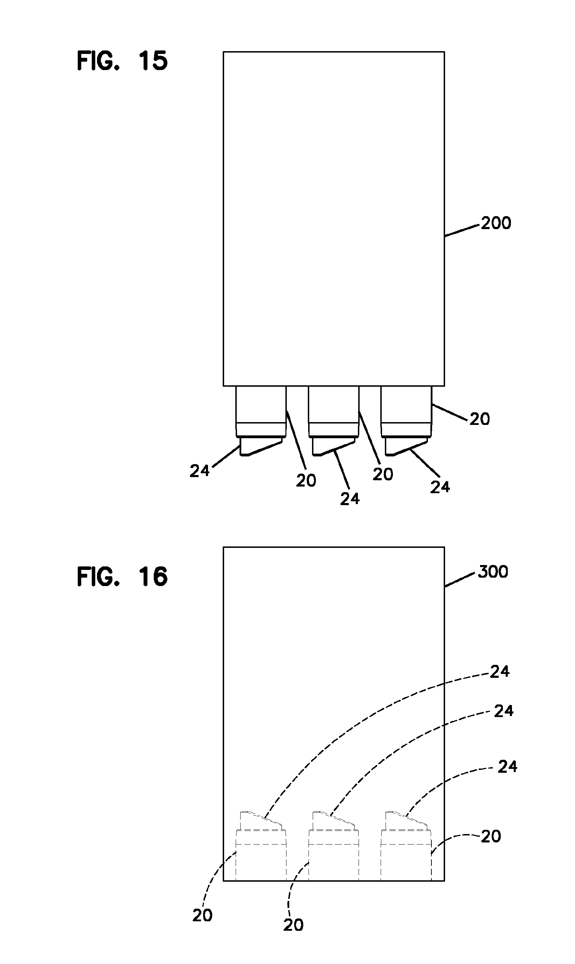

Referring now to FIGS. 15 and 16, two enclosures 200, 300, are shown with ports 20 for cables entering and exiting enclosures 200, 300. Ports 20 extend outward from an exterior of the enclosure 200 in FIG. 15. Ports 20 extend inwardly into enclosure 300 in FIG. 16. Ports 120 are also useable on the enclosures 200, 300, as desired. Enclosures 200, 300 can be used with blown fiber technology or fibers of cables extended to the enclosures such as in fiber to the home. In the case of blown fibers, a duct containing the blown fiber tubes connects to ports 20, 120.

### Parts List

- 10: Enclosure housing
- 12: Panel
- 20: Port
- 24: Tear-off tap
- 30: Port body
- 32: Tubular wall
- 34: Interior surface
- 36: Exterior surface
- 38: Side
- 42: First end
- 44: Second end
- 50: Tap body
- 52: Webbing
- 56: Axis
- 60: Handle
- 62: Side
- 64: Base
- 68: Reinforcement element
- 70: Spherically shape middle body portion
- 80: Exterior rib
- 82: Opposite side
- 84: Gripping Surface
- 86: Gripping Surface
- 92: Gap
- 96: Opening
- 110: Enclosure housing
- 112: Panel
- 120: Port
- 124: Tear-off tap

- 130: Port body
- 138: Side
- 142: First end
- 150: Tap body
- 152: Webbing
- 156: Axis
- 160: Handle
- 164: Base
- 166: Gripping surface
- 168: Gripping surface
- 192: Gap
- 190: Interior rib
- 200: Enclosure
- 300: Enclosure

## Claims

1. A telecommunications port (20, 120), comprising:
a port body (30, 130) having a first end (42, 142);
a tap (24, 124) positioned on the first end (42, 142);
**characterized in that**:
the tap (24, 124) including a tap body (50, 150) including a projecting handle (60, 160) and a reinforcement element (68);
a webbing (52, 152) sealing the tap (24, 124) to the first end (42, 142).

2. The telecommunications port (20, 120) of claim 1, wherein the reinforcement element (68) includes a spherically shaped middle body portion (70).

3. The telecommunications port (20, 120) of claims 1 and 2, wherein the reinforcement element (68) includes an exterior rib (80) extending around the periphery of the tap body (50) from the handle (60) toward an opposite side (82) of the tap body (50).

4. The telecommunications port (20, 120) of claim 3, wherein the exterior rib (80) tapers in height as it extends from the handle (60) to the opposite side of the tap body (50).

5. The telecommunications port (20, 120) of claims 1-4, wherein the reinforcement element (68) includes an interior rib (190) positioned on an inside surface of the tap body (150).

6. The telecommunications port (20, 120) of claims 1-5, wherein a portion of the tap body (50, 150) extends into the port body (30, 130) below the webbing (52, 152).

7. The telecommunications port (20, 120) of claims 1-6, wherein the first end (42, 142) has a circular shape to define a circular opening (96) or an elliptical shape to define an elliptical opening (96).

8. The telecommunications port (20, 120) of claims 3-7, wherein the exterior rib (80) is a circular rib (80) or an elliptical rib.

9. A method of using a telecommunication port comprising:
providing a tap (24, 124) including a tap body (50, 150) attached to a first end (42,142)of a port body (30, 130);
**characterized in that**:
gripping a projecting handle (60) on the tap body (50, 150); and
pulling the handle (60) to tear a webbing (52, 152) which connects the tap body (50, 150) to the port body (30, 130) to form an opening (96) wherein a reinforcement element (68) prevents breakage of the tap body (50, 150).

10. The method of claim 9, wherein a portion of the tap body (50, 150) extends into the port body (30, 130).

11. The method of claims 9 and 10, wherein the reinforcement element (68) includes a spherically shaped middle body portion (70).

12. The method of claims 9-11, wherein the reinforcement element (68) includes an exterior rib (80) extending around the periphery of the tap body (50) from the handle (60) toward an opposite side (82) of the tap body (50).

13. The method of claim 12, wherein the exterior rib (80) tapers in height as it extends from the handle (60) to the opposite side of the tap body (50).

14. The method of claims 9-13, wherein the reinforcement element (68) includes an interior rib (190) positioned on an inside surface of the tap body (150).
